# EUROPEAN PATENT SPECIFICATION

(11) **EP 3 855 171 B1**
(45) Date of publication and mention of the grant of the patent: **24.12.2025**
(21) Application number: 19862827.3
(22) Date of filing: 31.05.2019
(51) Int. Cl.: G01N 21/89, B65B 47/02, B65B 57/10, G01N 21/892, G01N 21/90

(54) **APPEARANCE INSPECTION DEVICE AND PTP PACKAGING MACHINE**
VORRICHTUNG ZUR INSPEKTION DES ERSCHEINUNGSBILDES UND PTP-VERPACKUNGSMASCHINE
DISPOSITIF D'INSPECTION D'ASPECT ET MACHINE D'EMBALLAGE PTP

(30) Priority: 18.09.2018 JP 2018173505
(43) Date of publication of application: 28.07.2021
(73) Proprietor: CKD CORPORATION, Komaki-shi, Aichi 485-8551 (JP)
(72) Inventor: KANBE, Satoshi, Komaki-shi, Aichi 485-8551 (JP)
(74) Representative: Winter, Brandl - Partnerschaft mbB
(86) International application number: PCT/JP2019/021676
(87) International publication number: WO 2020/059214

(56) References cited:
- WO-A1-2015/136598
- BE-A3- 1 014 410
- JP-A- 2001 074 667
- JP-A- 2001 349 837
- JP-A- 2007 279 064
- JP-A- 2009 103 487
- JP-A- 2018 084 496
- JP-A- 2018 084 496
- JP-A- H05 149 883
- US-A1- 2016 258 880

## Description

The present disclosure relates to an appearance inspection device used in manufacture of a PTP sheet and a PTP packaging machine equipped with the appearance inspection device.

A PTP (press through pack) sheet is known as a blister pack sheet generally used in the field of pharmaceutical products and the like. The PTP sheet includes a container film that has pocket portions with tablets placed therein, and a cover film that is mounted to the container film such as to seal an opening side of the pocket portions.

The PTP sheet may be manufactured by a PTP packaging machine. The PTP packaging machine includes, for example, a unit configured to form pocket portions in a conveyed container film in a belt-like form; a unit configured to fill the pocket portions with tablets; a unit configured to mount a cover film in a belt-like form to the container film such as to seal an opening side of the pocket portions; and a unit configured to punch out each unit of PTP sheet from a belt-like PTP film comprised of the container film and the cover film.

In a process of manufacturing the PTP sheet, an appearance inspection device may be provided to perform an inspection for adhesion of any foreign substance to the container film after the pocket portions of the conveyed container film are filled with the tablets and before the cover film is mounted to the container film. The appearance inspection device includes, for example, an irradiation unit configured to emit light toward a container film-side; an imaging unit configured to take an image of the container film and the like irradiated with the light; and a good/ poor quality judgment unit configured to perform a good/ poor quality judgment with regard to adhesion of any foreign substance, based on image data obtained by the imaging unit.

When the tablet is plain tablet or the like, tablet powder is likely to scatter and adhere to a periphery of the pocket portions in the container film in the course of filling the pocket portions with the tablets. Such tablet powder does not cause any significant problem in product quality unless the tablet powder forms a large mass. The appearance inspection device is, however, likely to identify such tablet powder as a foreign substance like hair, fiber waste or the like and determine an actually nondefective PTP sheet as a defective product. As a result, this is likely to increase the production cost.

An appearance inspection device has accordingly been proposed to distinguish tablet powder adhering to a container film from a foreign substance (as described in, for example, WO 2015/136 598 A). The appearance inspection device of WO 2015/136 598 A performs a series of operations and processings described below.

This appearance inspection device first irradiates a container film with light emitted from a predetermined reflection light source, sets a predetermined liquid crystal shutter at an ON position (light shielding position), and takes an image of the container film or the like by an imaging unit, so as to obtain a reflection image that is a color image. The appearance inspection device subsequently turns off the reflection light source, turns on a predetermined transmission light source, sets the liquid crystal shutter at an OFF position (light transmission position), and takes an image of the container film or the like by the imaging unit, so as to obtain a transmission image.

The appearance inspection device uses the reflection image and the transmission image thus obtained and determines whether a foreign substance candidate is tablet powder or not, based on the color and the position of the foreign substance candidate, which is expected to be a foreign substance present in the obtained reflection image and transmission image. More specifically, when the color of the foreign substance candidate in the reflection image (color image) is identical with the color of the tablet and the position of the foreign substance candidate in the reflection image is identical with the position of the foreign substance candidate in the transmission image, this foreign substance candidate is identified as tablet powder.

The above appearance inspection device described in WO 2015/136 598 Ais, however, likely to cause various problems: (1) significant load relating to the operations and the processings of the device; (2) difficulty in satisfying both the high inspection accuracy and the high-speed production of the PTP sheet; (3) possibility that tablet powder is mistakenly identified as a foreign substance by the determination process described above; and (4) actual difficulty in performing the determination process described above.

With regard to the above problem (1), it is required to appropriately operate the various devices, for example, the light source and the liquid crystal shutter, in the process of performing two imaging operations to obtain the transmission image and the reflection image. This imposes a significant load relating to the operations and the processing of the device.

Additionally, with regard to the above problem (2), the determination process based on the color and the position is relatively complicated. There is a need to decrease the resolution of the appearance inspection device, in order to perform such a complicated determination process, while allowing for extremely high speed tablet packaging (for example, 8000 tablets/ minute) of a PTP packaging device. Decreasing the resolution results in lowering the inspection accuracy. In order to maintain a certain level of resolution, on the other hand, there is a need to package the tablets at a low speed. This decreases the productivity.

Moreover, with regard to the above problem (3), the tablet generally contains various additives, for example, a diluting agent, a binding agent and disintegrating agent, in addition to one type or a plurality of different types of medicinal ingredients. The colors of the medicinal ingredients and the respective additives are not necessarily the same. Accordingly, even when the color of a certain foreign substance candidate is different from the color of the tablet, this foreign substance candidate may be tablet powder. The tablet powder is not fixed to the container film, so that the position of the same tablet powder is likely to be different in the two images. Accordingly, the technique of determining whether a foreign substance candidate is tablet powder or a foreign substance by comparison of the color and the position is thus likely to mistakenly identify the tablet powder as a foreign substance.

Furthermore, with regard to the above problem (4), it is actually difficult to determine whether the positions of a foreign substance candidate are the same in a reflection image and a transmission image obtained by performing two imaging operations with switching over the liquid crystal shutter between the ON position and the OFF position and turning on and off the light source, while the container film is generally conveyed with vibration at a high speed.

In addition, JP 2018 084496 A discloses a visual inspection device including a first imaging camera configured to photograph a content inside a first inspection region, a first upper transmission illumination, a first transmission-purpose polarizing plate, etc.; a first illumination mechanism configured to illuminate the content inside the first inspection region, a first lower reflection illumination, a first upper reflection illumination, a first reflection-purpose reflector, first reflection-purpose polarizing plate, etc.; and a second illumination mechanism configured to illuminate the content inside the first inspection region. The first transmission-purpose polarizing plate and the first reflection-purpose polarizing plate have their polarization axes intersecting with each other. The first illumination mechanism and the second illumination mechanism operate with timings different from each other. The first imaging camera operates in sync with a timing at which the illumination mechanisms are operated.

By taking into account the circumstances described above, an object of the present disclosure is to provide an appearance inspection device configured to perform an inspection for adhesion of any foreign substance with high accuracy, based on image data obtained by one single imaging operation, without requiring any complicated determination process, as well as a PTP packaging machine.

According to the present invention, this object is accomplished by an appearance inspection device as defined in claim 1 and by a PTP packaging machine as defined in claim 5. Advantageous further developments are subject of the accompanying dependent claims. The following describes each of various aspects provided adequately to solve the problems described above. Functions and advantageous effects that are characteristic of each of the aspects are also described as appropriate.

Aspect 1: There is provided an appearance inspection device used in a process of manufacturing a PTP sheet configured such that a tablet is placed in a pocket portion formed in a container film and that a cover film is mounted to the container film so as to close the pocket portion. The appearance inspection device is configured to perform an inspection for adhesion of a foreign substance to the container film in a stage after the pocket portion of the container film conveyed in a belt-like form is filled with the tablet and before the cover film is mounted to the container film. The appearance inspection device comprises an imaging unit provided with a predetermined imaging-side polarizing filter and configured to take an image of the container film through the imaging-side polarizing filter; a first irradiation unit placed on a side opposite to the imaging unit across the container film, provided with a predetermined first light source, and configured to emit light from the first light source toward a protrusion side of the pocket portion in the container film; a second irradiation unit provided with a predetermined second light source and a predetermined emission-side polarizing filter and configured to emit light from the second light source through the emission-side polarizing filter toward an opening side of the pocket portion in the container film; and a good/ poor quality judgment unit configured to perform a good/ poor quality judgment with regard to adhesion of a foreign substance, based on image data obtained by the imaging unit. The good/ poor quality judgment unit is configured to perform: a first good/ poor quality judgment that is a good/ poor quality judgment based on image data obtained by imaging the container film by the imaging unit in a state that the container film is irradiated with lights emitted from both the first irradiation unit and the second irradiation unit; and a second good/ poor quality judgment that is a good/ poor quality judgment based on image data obtained by imaging the container film by the imaging unit in a state that the container film is irradiated with light emitted from one of the first irradiation unit and the second irradiation unit. The good/ poor quality judgment unit is configured to perform a good/ poor quality judgment selected between the first good/ poor quality judgment and the second good/ poor quality judgment.

The imaging-side polarizing filter may have a polarizing direction set to a direction of shielding specularly reflected light from a container film-side, out of the light emitted from the second irradiation unit. The imaging unit may be configured to take an image of the container film that is irradiated with the lights emitted from both the first irradiation unit and the second irradiation unit.

The "adhesion of any foreign substance to the container film" includes the state that a foreign substance is simply placed on the container film.

The appearance inspection device of this aspect 1 causes the imaging unit to take an image of the container film that is irradiated with the lights emitted from both the first irradiation unit and the second irradiation unit.

In the case of irradiating the container film with light emitted from only the first irradiation unit, transmitted light passing through a location of the container film other than a location where tablet powder is present and a location where a foreign substance is present, enters the imaging unit. Accordingly, the location where the tablet powder is present and the location where the foreign substance is present are respectively shown as dark areas.

In the case of irradiating the container film with light emitted from only the second irradiation unit, on the other hand, a foreign substance (for example, hair or fiber waste) has a smoother surface compared with tablet powder, so that the emitted light is basically reflected diffusely by the tablet powder and reflected specularly by the foreign substance. The polarizing direction of the imaging-side polarizing filter is set to the direction of shielding the specularly reflected light from the container film-side out of the light emitted from the second irradiation unit, so that the diffusely reflected light from the tablet powder has a large quantity of light passing through the imaging-side polarizing filter, whereas the specularly reflected light from the foreign substance has a small quantity of light passing through the imaging-side polarizing filter. Accordingly, in the image data obtained in this case, a location where tablet powder is present is shown as a bright area, and a location where a foreign substance is present is shown as a dark area.

In the case of irradiating the container film with the light emitted from only one of the two irradiation units, the image data described above are obtained respectively. In the case of irradiating the container film with the lights emitted from both the irradiation units, however, at the location where the tablet powder is present in the obtained image data, the dark area made by the first irradiation unit overlaps with the bright area made by the second irradiation unit. As a result, this causes the location where the tablet powder is present to be shown as a bright area. At the location where the foreign substance is present in the obtained image data, on the other hand, the dark area made by the first irradiation unit overlaps with the dark area made by the second irradiation unit. As a result, this causes the location where the foreign substance is present to be shown as a dark area. This configuration accordingly causes only the location where the foreign substance is present to be distinctly recognizable as a dark area, while causing the location where the tablet powder is present to be hardly recognizable (indistinguishable from the surrounding bright areas) in the obtained image data. This configuration does not require any complicated determination process to determine whether the tablet powder is present or any foreign substance is present but enables an inspection to be performed based on the obtained image data with ignoring the tablet powder. This configuration accordingly enables an inspection for adhesion of any foreign substance to be performed with high accuracy.

In the appearance inspection device of this aspect 1, the good/ poor quality judgment unit is allowed to perform both the good/ poor quality judgment based on the image data obtained with emission of the lights from the two irradiation units (i.e., image data with the tablet powder hardly recognizable) (first good/ poor quality judgment) and the good/ poor quality judgment based on the image data with emission of the light from one of the two irradiation units (i.e., image data with the tablet powder recognizable) (second good/ poor quality judgment). The good/ poor quality judgment unit is also configured to perform one of the first good/ poor quality judgment and the second good/ poor quality judgment selected by, for example, a user. For example, the good/ poor quality judgment unit may select the first good/ poor quality judgment for an inspection in a system of not taking into account the tablet powder and may select the second good/ poor quality judgment for an inspection in a system of taking into account the tablet powder (for example, a large mass or a small mass of the tablet powder). This configuration does not require separate devices provided for performing the respective good/ poor quality judgments and thereby suppresses a cost increase, while broadening the options of the inspection technique.

Furthermore, this configuration does not require any complicated determination process to distinguish a foreign substance from the tablet powder and can thus sufficiently enhance the resolution of the appearance inspection device with allowing for high-speed packaging of the tablet. This configuration accordingly achieves both the high inspection accuracy and the high-speed production of the PTP sheet.

The configuration of the aspect 1 described above requires imaging of the container film irradiated with the lights emitted from the two irradiation units only once to obtain the image data used for the inspection. This configuration accordingly reduces the load relating to the operations and the processings of the device.

The first irradiation unit is preferably configured to emit diffused light. For example, the first irradiation unit may be provided with a predetermined diffuser plate and configured to emit diffused light from the first light source through the diffuser plate toward the container film. In another example, the first irradiation unit may be configured as an illumination device provided with a large number of first light sources that are comprised of LEDs and that are uniformly arranged.

Aspect 2. In the appearance inspection device described in the above aspect 1, the good/ poor quality judgment unit may be configured to perform the good/ poor quality judgment with regard to adhesion of the foreign substance, based on only a luminance value included in the image data obtained by the imaging unit.

The foreign substance is shown as a dark area, and the tablet powder is shown as a bright area in the obtained image data. This enables the good/ poor quality judgment with regard to adhesion of the foreign substance to be performed, based on only the luminance value as described in this aspect 2. This configuration does not require any complicated process to identify whether a foreign substance is actually present (for example, a process of specifying the area and the shape of a location where a foreign substance is expected to be present). This configuration accordingly reduces the processing load of the inspection and increases the speed of the inspection.

Aspect 3. In the appearance inspection device described in any of the above aspects 1 and 2, the polarizing direction of the imaging-side polarizing filter may be different from a polarizing direction of the emission-side polarizing filter by 90 degrees.

The configuration of this aspect 3 enables the specularly reflected light that is reflected from the foreign substance to be more reliably shielded by the imaging-side polarizing filter. This configuration accordingly enables only the location where a foreign substance is present to be made more distinctly recognizable in the obtained image data and enables the inspection for adhesion of any foreign substance to be performed with the higher accuracy.

Aspect 4. There is provided a PTP packaging machine comprising the appearance inspection device described in any of the above aspects 1 to 3.

The configuration of this aspect 4 has similar functions and advantageous effects to those of the aspect 1 and the others described above.

The PTP packaging machine may comprise, for example, a pocket portion forming unit configured to form a pocket portion in a container film conveyed in a belt-like form; a filling unit configured to fill the pocket portion with a tablet; a mounting unit configured to mount a cover film in a belt-like form to the container film so as to close the pocket portion; and a separation unit configured to separate each unit of PTP sheet from a PTP film in a belt-like form obtained by mounting the cover film. The PTP packaging machine may further comprise a discharge unit configured to discharge a PTP sheet determined as defective by the appearance inspection device.
Fig. 1 is a perspective view illustrating a PTP sheet;
Fig. 2 is a partly enlarged sectional view illustrating the PTP sheet;
Fig. 3 is a perspective view illustrating a PTP film;
Fig. 4 is a schematic diagram illustrating the schematic configuration of a PTP packaging machine;
Fig. 5 is a block diagram illustrating the electrical configuration of an appearance inspection device;
Fig. 6 is a schematic diagram illustrating the schematic configuration of the appearance inspection device;
Fig. 7 is a schematic diagram illustrating one example of image data obtained in the state that lights are emitted from two illumination devices; and
Fig. 8 is a schematic diagram illustrating one example of image data obtained in the state that light is emitted from only a first illumination device.

The following describes one embodiment with reference to drawings. The configuration of a PTP sheet is described first in detail.

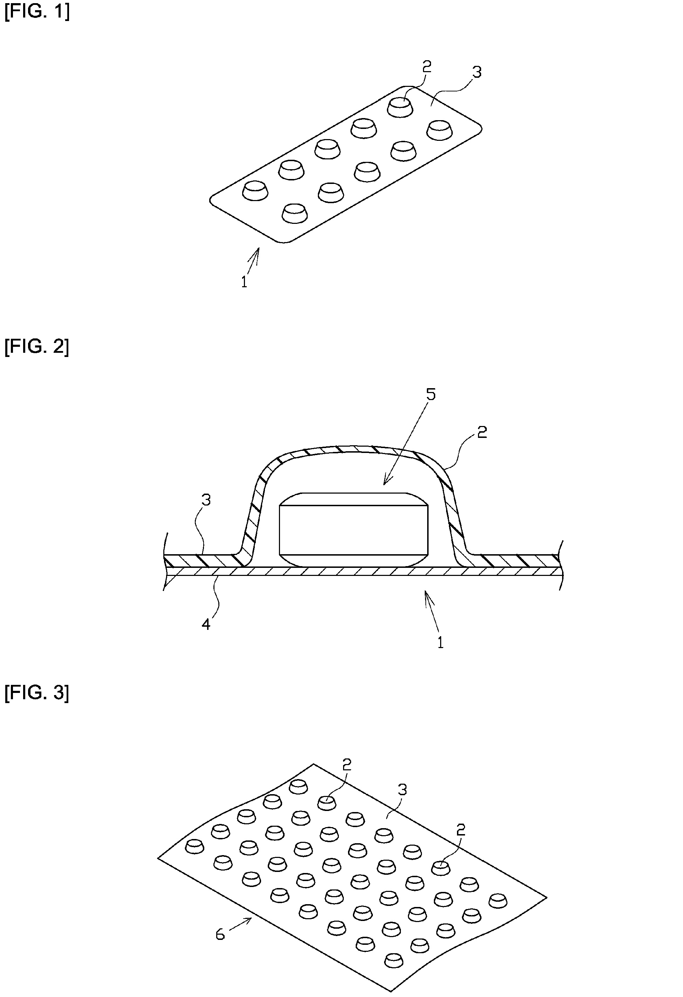

As shown in Fig. 1 and Fig. 2, a PTP sheet 1 includes a container film 3 having a plurality of pocket portions 2, and a cover film 4 mounted to the container film 3 such as to close the respective pocket portions 2.

The container film 3 according to the embodiment is made of a transparent or translucent thermoplastic resin material, such as PP (polypropylene) or PVC (polyvinyl chloride), and has translucency. The cover film 4 is, on the other hand, made of an opaque material (for example, aluminum foil) with a sealant made of, for example, a polypropylene resin, provided on the surface thereof. The materials of the respective films 3 and 4 are, however, not limited to these examples, but other materials may be employed for the films 3 and 4.

The PTP sheet 1 is manufactured by punching sheets from a PTP film 6 in a belt-like form (shown in Fig. 3), which is comprised of the container film 3 in a belt-like form and the cover film 4 in a belt-like form, and is formed in an approximately rectangular shape in plan view. In the PTP sheet 1, two pocket arrays are formed along a sheet short side direction, and each pocket array includes five pocket portions 2 arranged along a sheet longitudinal direction. Accordingly, a total of ten pocket portions 2 are formed in the PTP sheet 1. One tablet 5 is placed in each of the pocket portions 2. The tablet 5 according to the embodiment is a disk-shaped plain tablet having a circular shape in plan view.

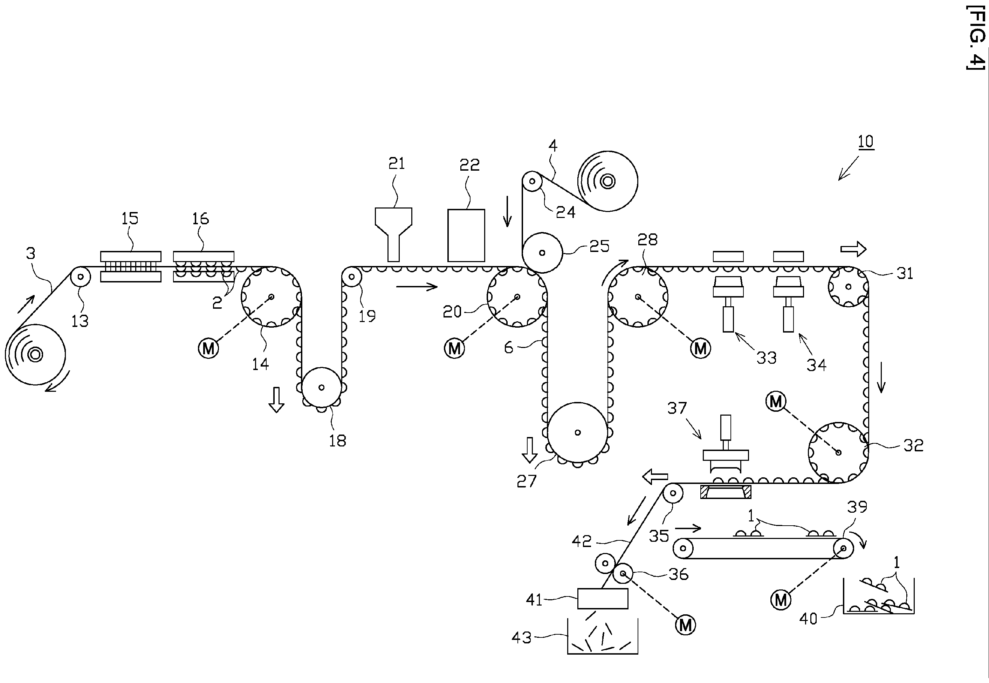

The following describes the general configuration of a PTP packaging machine 10 used to manufacture the PTP sheet 1 described above, with reference to Fig. 4.

As shown in Fig. 4, a film roll of the belt-like container film 3 is wound in a roll form on a most upstream side of the PTP packaging machine 10. A pullout end of the container film 3 wound in the roll form is guided by a guide roll 13. The container film 3 is then laid on an intermittent feed roll 14 provided on a downstream side of the guide roll 13. The intermittent feed roll 14 is linked with a motor rotating in an intermittent manner, so as to convey the container film 3 intermittently.

A heating device 15 and a pocket portion forming device 16 are sequentially placed along the conveyance path of the container film 3 between the guide roll 13 and the intermittent feed roll 14. In the state that the container film 3 is heated to be relatively soft by the heating device 15, the plurality of pocket portions 2 are formed at predetermined positions of the container film 3 by the pocket portion forming device 16. Formation of the pocket portions 2 is performed during an interval between conveying operations of the container film 3 by the intermittent feed roll 14. The heating device 15 and the pocket portion forming device 16 are configured as the pocket portion forming unit according to the embodiment.

The container film 3 fed from the intermittent feed roll 14 is sequentially laid on a tension roll 18, a guide roll 19 and a film receiving roll 20 in this order. The film receiving roll 20 is linked with a motor rotating at a fixed speed, so as to continuously convey the container film 3 at a fixed speed. The tension roll 18 is configured to pull the container film 3 in a direction of applying tension by an elastic force. This configuration prevents a slack of the container film 3 due to a difference between the conveying operation by the intermittent feed roll 14 and the conveying operation by the film receiving roll 20 and constantly keeps the container film 3 in the state of tension.

A tablet filling device 21 and an appearance inspection device 22 are sequentially placed along the conveyance path of the container film 3 between the guide roll 19 and the film receiving roll 20. The tablet filling device 21 serves as the filling unit to automatically fill the pocket portions 2 with the tablets 5. The tablet filling device 21 opens a shutter at every predetermined time interval to drop the tablet 5, in synchronization with the conveying operation of the container film 3 by the film receiving roll 20. Each of the pocket portions 2 is filled with the tablet 5 by this shutter opening operation.

The appearance inspection device 22 is configured to perform an inspection for adhesion of any foreign substance to the container film 3. The details of the appearance inspection device 22 will be described later.

A film roll of the belt-like cover film 4 is also wound in a roll form on a most upstream side. A pullout end of the cover film 4 wound in the roll form is guided by a guide roll 24 to a heating roll 25.

The heating roll 25 is pressed against to be in contact with the film receiving roll 20 described above. The container film 3 and the cover film 4 are accordingly fed into between the two rolls 20 and 25. The container film 3 and the cover film 4 pass through between the two rolls 20 and 25 in the heated and pressed contact state, so that the cover film 4 is mounted to the container film 3 such as to close the respective pocket portions 2. This series of operations manufactures the belt-like PTP film 6 that has the pocket portions 2 respectively filled with the tablets 5. The film receiving roll 20 and the heating roll 25 are configured as the mounting unit according to the embodiment.

The PTP film 6 fed from the film receiving roll 20 is sequentially laid on a tension roll 27 and an intermittent feed roll 28 in this order. The intermittent feed roll 28 is linked with a motor rotating in an intermittent manner, so as to convey the PTP film 6 intermittently. The tension roll 27 is configured to pull the PTP film 6 in a direction of applying tension by an elastic force. This configuration prevents a slack of the PTP film 6 due to a difference between the conveying operation by the film receiving roll 20 and the conveying operation by the intermittent feed roll 28 and constantly keeps the PTP film 6 in the state of tension.

The PTP film 6 fed from the intermittent feed roll 28 is sequentially laid on a tension roll 31 and an intermittent feed roll 32 in this order. The intermittent feed roll 32 is linked with a motor rotating in an intermittent manner, so as to convey the PTP film 6 intermittently. The tension roll 31 is configured to pull the PTP film 6 in a direction of applying tension by an elastic force and thereby serves to prevent a slack of the PTP film 6 between these intermittent feed rolls 28 and 32.

A slit formation device 33 and a stamping device 34 are sequentially placed along the conveyance path of the PTP film 6 between the intermittent feed roll 28 and the tension roll 31. The slit formation device 33 serves to form a cutting slit at predetermined positions of the PTP film 6. The stamping device 34 serves to stamp a mark at predetermined positions of the PTP film 6 (for example, in tag portions). The cutting slits and the marks are omitted from the illustrations of Fig. 1 and other drawings.

The PTP film 6 fed from the intermittent feed roll 32 is sequentially laid on a tension roll 35 and a continuous feed roll 36 in this order on a downstream side of the intermittent feed roll 32. A sheet punching device 37 is placed along the conveyance path of the PTP film 6 between the intermittent feed roll 32 and the tension roll 35. The sheet punching device 37 serves to punch out the outer periphery of each unit of PTP sheet 1 from the PTP film 6. The sheet punching device 37 is configured as the separation unit according to the embodiment.

The respective PTP sheets 1 punched out by the sheet punching device 37 are conveyed by a conveyor 39 and are temporarily accumulated in a finished product hopper 40. When a PTP sheet 1 is determined as a defective product by the appearance inspection device 22 described above, however, this PTP sheet 1 determined as defective is not conveyed to the finished product hopper 40 but is separately discharged by a non-illustrated defective sheet discharge mechanism serving as the discharge unit.

A cutting device 41 is provided on a downstream side of the continuous feed roll 36. An unrequired film portion 42 that is a residual part (scrap part) remaining in a belt-like form after punching out by the sheet punching device 37 is guided by the tension roll 35 and the continuous feed roll 36 and is subsequently led to the cutting device 41. A driven roll is pressed against to be in contact with the continuous feed roll 36, so that the unrequired film portion 42 is placed and conveyed between the driven roll and the continuous feed roll 36. The cutting device 41 serves to cut the unrequired film portion 42 into predetermined dimension. The cut pieces of the unrequired film portion 42 (scraps) are accumulated in a scrap hopper 43 and are then disposed separately.

Each of the rolls, for example, the rolls 14, 20, 28, 31 and 32 described above is arranged such that the roll surface is opposed to the pocket portions 2. The surface of each roll, for example, the surface of the intermittent feed roll 14, has recesses that are formed to place the pocket portions 2 therein. This configuration suppresses the pocket portions 2 from being crushed. The feeding operation with the pocket portions 2 placed in the respective recesses of each roll, for example, the intermittent feed roll 14, achieves the reliable intermittent feed and continuous feed.

The PTP packaging machine 10 of the embodiment is configured to package the tablets 5 at a very high speed (for example, 8000 tablets/ minute).

The following describes the appearance inspection device 22. The appearance inspection device 22 is configured to perform an inspection for adhesion of any foreign substance to the container film 3 (especially, a portion that finally forms the PTP sheet 1) after the pocket portions 2 of the conveyed belt-like container film 3 are filled with the tablets 5 and before the cover film 4 is mounted to the container film 3.

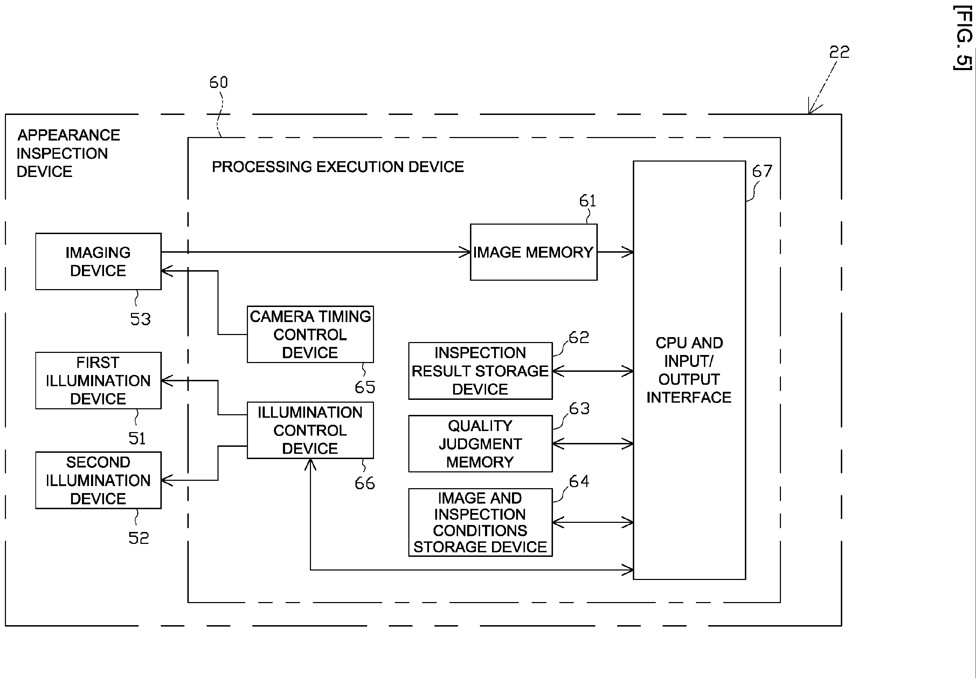

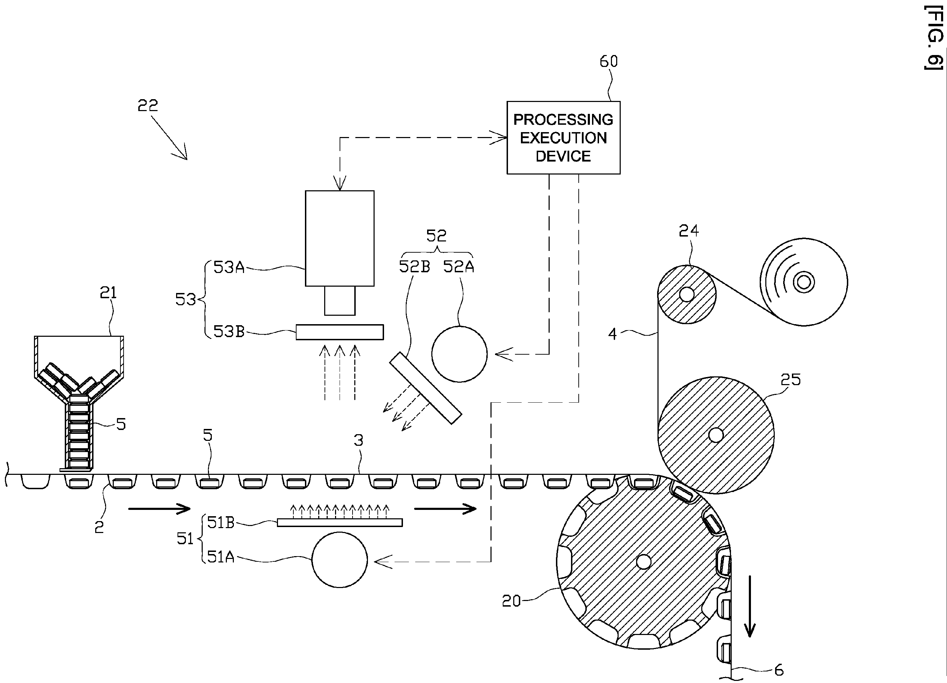

As shown in Fig. 5 and Fig. 6, the appearance inspection device 22 includes a first illumination device 51, a second illumination device 52, an imaging device53 and a processing execution device 60. According to the embodiment, the first illumination device 51 corresponds to the first irradiation unit; the second illumination device 52 corresponds to the second irradiation unit; the imaging device 53 corresponds to the imaging unit; and the processing execution device 60 corresponds to the good/ poor quality judgment unit.

The first illumination device 51 is placed below the conveyed container film 3 and includes a first light source 51A that is configured by, for example, an LED to emit light such as infrared light and a diffuser plate 51B that is placed between the first light source 51A and the container film 3 and that is configured by, for example, frosted glass. The first illumination device 51 emits diffused light toward a protrusion side of the pocket portions 2 of the container film 3.

The second illumination device 52 is placed above the conveyed container film 3 and includes a second light source 52A that is configured by, for example, an LED to emit light such as infrared light and a predetermined emission-side polarizing filter 52B. The second illumination device 52 emits light from the second light source 52A through the emission-side polarizing filter 52B toward an opening side of the pocket portions 2 of the container film 3. The light passing through the emission-side polarizing filter 52B becomes polarized light vibrating only in a predetermined direction. As long as the condition that the container film 3 is irradiated with the light that is emitted from the second light source 52A and passes through the emission-side polarizing filter 52B, is satisfied, the positional relationship between the second light source 52A and the emission-side polarizing filter 52B may be changed appropriately. Accordingly, for example, the second light source 52A and the emission-side polarizing filter 52B may be arranged to be away from each other.

The imaging device 53 is provided on a side opposite to the first illumination device 51 across the container film 3 and includes a camera 53A and an imaging-side polarizing filter 53B. According to the embodiment, a CCD camera having sensitivity to at least infrared light is employed as the camera 53A. The camera 53A is, however, not limited to the CCD camera, but a CMOS camera may be employed as the camera 53A.

The camera 53A performs two-dimensional imaging of the container film 3 through the imaging-side polarizing filter 53B, while the container film 3 is irradiated with the lights emitted from the illumination devices 51 and 52. Image data (luminance image data) obtained by imaging with the camera 53A is converted into a digital signal (image signal) inside of the camera 53A and is input in the form of the digital signal into the processing execution device 60. The imaging range of the camera 53A is set to a range that covers at least one PTP sheet 1 (a plurality of PTP sheets according to the embodiment).

The imaging-side polarizing filter 53B is placed between the camera 53A and the container film 3 and has a polarizing direction set to a direction of shielding specularly reflected light from a container film 3-side, out of the light emitted from the second illumination device 52. More specifically, the polarizing direction of the imaging-side polarizing filter 53B is made different from a polarizing direction of the emission-side polarizing filter 52B by a predetermined angle or more (for example, 45 degrees or more). According to the embodiment, the polarizing direction of the imaging-side polarizing filter 53B is made different from the polarizing direction of the emission-side polarizing filter 52B by 90 degrees.

When the polarizing direction of the imaging-side polarizing filter 53B is set as described above, specularly reflected light (light having a polarizing direction substantially identical with the polarizing direction of the light emitted from the second illumination device 52) out of the reflected light that is emitted from the second illumination device 52 and reflected from the container film 3-side is shielded by the imaging-side polarizing filter 53B and hardly enters the camera 53A. Diffusely reflected light (light having a polarizing direction different from the polarizing direction of the light emitted from the second illumination device 52) out of the reflected light that is emitted from the second illumination device 52 and reflected from the container film 3-side, on the other hand, passes through the imaging-side polarizing filter 53B and enters the camera 53A.

The positional relationship between the camera 53A and the imaging-side polarizing filter 53B is not specifically limited as long as the condition that the camera 53A takes an image of the container film 3 through the imaging-side polarizing filter 53B, is satisfied. Accordingly, for example, the camera 53A and the imaging-side polarizing filter 53B may be arranged to be further away from each other.

The processing execution device 60 is configured as a so-called computer system that includes, for example, a CPU serving as the arithmetic unit, a ROM serving to store various programs, and a RAM serving to temporarily store a variety of data such as arithmetic data and input and output data. The processing execution device 60 includes an image memory 61, an inspection result storage device 62, a quality judgment memory 63, an image and inspection conditions storage device 64, a camera timing control device 65, an illumination control device 66, and a CPU and input/ output interface 67.

The image memory 61 is configured to store image data obtained by the camera 53A. An inspection is performed, based on the image data stored in this image memory 61. The image may be processed before the inspection is performed. For example, the image may be processed by a masking process or a shading correction. There is a technical limitation in uniformly irradiating an entire imaging range, for example, in the container film 3, with the lights emitted from the illumination devices 51 and 52. The shading correction is accordingly performed to correct a variation in luminosity of light caused by a difference in position. Binarized image data obtained by a binarizing process of the image data, masked image data obtained by a masking process of the image data and the like are also stored into the image memory 61.

The inspection result storage device 62 is configured to, for example, good/ poor quality judgment result data and statistical data obtained by probability statistical processing of the good/ poor quality judgment result data.

The quality judgment memory 63 is configured to store various information used for the inspection. The various information includes quality judgment criteria (for example, a threshold value) used for good/ poor quality judgment, a binarization threshold value used for a binarization process, and data for defining an inspection object range (for example, information for specifying portions corresponding to the tablets 5 in the image data and design data with regard to a positional relationship of the pocket portions 2 relative to an outer periphery of the PTP sheet 1). According to the embodiment, a luminance threshold value and an area reference value are stored as the quality judgment criteria. The luminance threshold value is used to perform good/ poor quality judgment based on the luminance, and the area reference value is used to perform good/ poor quality judgment based on the area. According to the embodiment, appropriate numerical values calculated in advance are respectively stored as the luminance threshold value and the area reference value.

The image and inspection conditions storge device 64 is configured by, for example, a hard disk drive, to store the date and the time of each poor quality judgment and inspection conditions used for the inspection.

The camera timing control device 65 is configured to control an imaging timing of the camera 53A. This imaging timing is controlled on the basis of a signal from a non-illustrated encoder provided in the PTP packaging machine 10. Imaging by the camera 53A is performed every time a predetermined amount of the container film 3 is fed.

The illumination control device 66 is configured to control the operations of the first illumination device 51 and the second illumination device 52. According to the embodiment, when a first good/ poor quality judgment described later is performed, the illumination control device 66 controls the two illumination devices 51 and 52 to operate both the illumination devices 51 and 52. When a second good/ poor quality judgment described later is performed, on the other hand, the illumination control device 66 controls the two illumination devices 51 and 52 to operate only the first illumination device 51 and turn off the second illumination device 52.

The CPU and input/ output interface 67 is involved in various controls in the appearance inspection device 22. The CPU and input/ output interface 67 is configured to send and receive signals to and from the respective component devices of the PTP packaging machine 10. This configuration enables, for example, the defective sheet discharge mechanism described above to be controlled. The CPU and input/ output interface 67 also serves to send various data to a predetermined display unit (not shown) such as a display. This function enables various images and inspection results to be displayed on this display unit.

Furthermore, the processing execution device 60 performs good/ poor quality judgment based on the image data obtained by the camera 53A, with using, for example, the storage contents of the quality judgment memory 63. According to the embodiment, the processing execution device 60 is configured to selectively perform two different types of the good/ poor quality judgment, i.e., a first good/ poor quality judgment and a second good/ poor quality judgment. According to the embodiment, the good/ poor quality judgment to be performed by the processing execution device 60 is switched over by operating a predetermined switching unit (not shown).

In the case of performing the first good/ poor quality judgment, the processing execution device 60 operates both the illumination devices 51 and 52 to irradiate the container film 3 with the lights emitted from both the illumination devices 51 and 52 and performs the good/ poor quality judgment, based on the image data obtained by the camera 53A. More specifically, the processing execution device 60 first sets an inspection object range in the obtained image data. For example, a portion that finally forms the PTP sheet 1 (sheet portion) other than locations where the tablets 5 are present, out of an area occupied by the container film 3 in the image data, is set as the inspection object range by a predetermined masking process of the obtained image data. According to a modification, a portion other than locations where the pocket portions 2 are present, out of the area occupied by the container film 3 may be set as the inspection object range.

The processing execution device 60 then determines whether any foreign substance such as hair or fiber waste adheres to the container film 3, based on luminance values of respective pixels located within the set inspection object range and the luminance threshold value stored in the quality judgment memory 63. According to the embodiment, in the case where the luminance values of the respective pixels are larger than the luminance threshold value described above, the processing execution device 60 determines no adhesion of any foreign substance and gives a good quality judgment result. If this is not the case, the processing execution device 60 determines adhesion of some foreign substance and gives a poor quality judgment result. A modified procedure may divide the inspection object range into a plurality of sections, calculate a numerical value (for example, an average value or the like) on the basis of the luminance values of pixels located in each of the sections, and compare the calculated numerical value with the luminance threshold value described above, so as to make a good/ poor quality judgment with regard to adhesion of any foreign substance. Another modified procedure may calculate a luminance difference between each pair of adjacent pixels and compare the calculated luminance difference with the luminance threshold value described above, so as to make a good/ poor quality judgment.

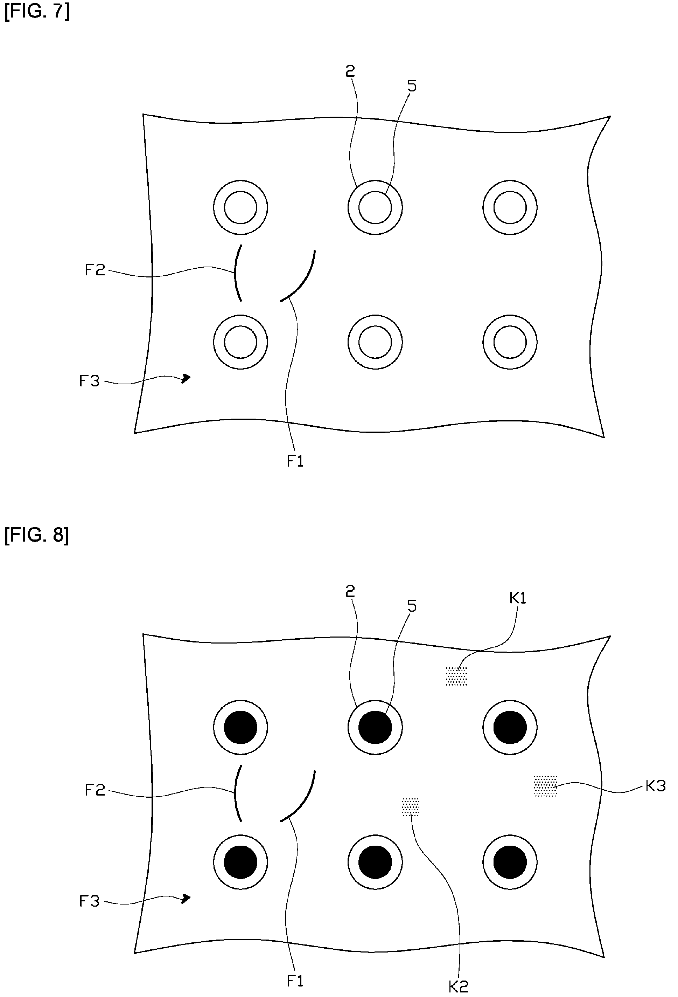

As shown in Fig. 7, in the image data obtained in the state that both the illumination devices 51 and 52 are respectively operated, locations where tablet powders are present are hardly recognizable, while locations where foreign substances F1, F2 and F3 are present are distinctly recognizable as dark areas. This is because of the following reason.

As shown in Fig. 8, in the image data obtained in the state that only the first illumination device 51 is operated, the foreign substances F1, F2 and F3 and tablet powders K1, K2, and K3 are respectively shown as dark areas having relatively low luminance values. In the image data obtained in the state that only the second illumination device 52 is operated, on the other hand, the presence of the imaging-side polarizing filter 53B causes specularly reflected light that is reflected from the foreign substances F1, F2 and F3 to hardly enter the camera 53A but causes diffusely reflected light that is reflected from the tablet powders K1, K2 and K3 to enter the camera 53A. Accordingly, the foreign substances F1, F2 and F3 are shown as dark areas, and the tablet powders K1, K2 and K3 are shown as bright areas. Accordingly, in the image data obtained in the state that both the illumination devices 51 and 52 are respectively operated, the dark areas made by the first illumination device 51 overlap with the bright areas made by the second illumination device 52 at the locations where the tablet powders K1, K2 and K3 are present. As a result, this causes the locations where the tablet powders K1, K2 and K3 are present to be shown as bright areas and to become hardly recognizable in the image data. In the image data, at the locations where the foreign substances F1, F2 and F3 are present, on the other hand, the dark areas made by the first illumination device 51 overlap with the dark areas made by the second illumination device 52. As a result, these locations become distinctly recognizable as dark areas.

In the case of performing the second good/ poor quality judgment, the processing execution device 60 operates only the first illumination device 51 to irradiate the container film 3 with the light emitted from the first illumination device 51 and performs good/ poor quality judgment, based on the image data obtained by the camera 53A (shown in Fig. 8). More specifically, the processing execution device 60 first processes the image data by a binarization process using the above binarization threshold value stored in the quality judgment memory 63 to obtain binarized image data that expresses the luminance of each pixel by "0 (dark)" or "1 (bright"). The processing execution device 60 then sets an inspection object range in the obtained binarized image data. The inspection object range is set by a similar procedure to the procedure in the case of performing the first good/ poor quality judgment. The processing execution device 60 subsequently performs lump processing of the set inspection object range as a target. The lump processing specifies linkage components with regard to each pixel having the luminance "0 (dark)" in the binarized image data and calculates an area (the number of pixels according to the embodiment) of the specified linkage components (lump portion). The processing execution device 60 then determines whether any foreign substance such as hair or fiber waste or a relatively large mass of tablet powder adheres to the container film 3, based on the area of the lump portion and the above area reference value stored in the quality judgment memory 63. According to the embodiment, in the case where the areas of the respective lump portions are smaller than the area reference value described above, the processing execution device 60 determines no occurrence of any significant problem with regard to adhesion of any foreign substance or a large mass of tablet powder and gives a good quality judgment result. If this is not the case, the processing execution device 60 gives a poor quality judgment result.

In the case of performing the first good/ poor quality judgment or the second good/ poor quality judgment, a modified procedure may additionally perform an inspection for any defect of the tablet 5 (for example, a crack of the tablet 5, inclusion of any broken piece of the tablet 5, missing of the tablet 5, or a different shape of the tablet 5), based on the obtained image data. In the case of performing the second good/ poor quality judgment, a modified procedure may perform the quality judgment based on the shape of the linkage components, in addition to or in place of the quality judgment based on the area.

As described above, the first good/ poor quality judgment ensures the good/ poor quality determination with regard to adhesion of any foreign substance by only comparing the luminance values of the image data with the luminance threshold value without requiring the lump processing, the area comparison and the like. In other words, the first good/ poor quality judgment achieves the good/ poor quality determination with regard to adhesion of any foreign substance, based on only the luminance values included in the various information obtained from the image data. The second good/ poor quality judgment, on the other hand, requires the lump processing and the area comparison but enables relatively large masses of tablet powder as well as any foreign substance to be detected.

As described above in detail, the configuration of the embodiment described above causes only the locations where the foreign substances F1, F2 and F3 are present to be distinctly recognizable, while causing the locations where the tablet powders K1, K2 and K3 are present to be hardly recognizable in the image data obtained in the state that both the illumination devices 51 and 52 are operated. This configuration does not require any complicated determination process to determine whether the tablet powder is present or any foreign substance is present but enables an inspection to be performed based on the obtained image data with ignoring the tablet powders K1, K2 and K3. This configuration accordingly enables an inspection for adhesion of any foreign substance to be performed with high accuracy.

Furthermore, the configuration of the embodiment does not require any complicated determination process to distinguish a foreign substance from the tablet powder and can thus sufficiently enhance the resolution of the appearance inspection device 22 with allowing for high-speed packaging of the tablets 5. This configuration accordingly achieves both the high inspection accuracy and the high-speed production of the PTP sheet 1.

Moreover, the configuration of the embodiment requires imaging of the container film 3 irradiated with the lights emitted from the two illumination devices 51 and 52 only once to obtain the image data used for the inspection. This configuration accordingly reduces the load relating to the operations and the processings of the device.

Furthermore, the first good/ poor quality judgment ensures the good/ poor quality determination with regard to adhesion of any foreign substance, based on only the luminance values. This configuration does not require any complicated process to identify whether a foreign substance is actually present (for example, a process of specifying the area and the shape of a location where a foreign substance is expected to be present). This configuration accordingly reduces the processing load of the inspection and increases the speed of the inspection.

Additionally, the processing execution device 60 is allowed to perform both the first good/ poor quality judgment, which is the good/ poor quality judgment based on the image data obtained in the state of emission of the lights from both the illumination devices 51 and 52, and the second good/ poor quality judgment, which is the good/ poor quality judgment based on the image data obtained in the state of emission of the light from only the first illumination device 51. The processing execution device 60 is also allowed to perform selected one of the first good/ poor quality judgment and the second good/ poor quality judgment. For example, the processing execution device 60 may select the first good/ poor quality judgment for an inspection in a system of not taking into account the tablet powder and may select the second good/ poor quality judgment for an inspection in a system of taking into account the tablet powder (for example, a large mass or a small mass of the tablet powder). This configuration does not require separate devices provided for performing the respective good/ poor quality judgments and thereby suppresses a cost increase, while broadening the options of the inspection technique.

The polarizing direction of the imaging-side polarizing filter 53B is made different from the polarizing direction of the emission-side polarizing filter 52B by 90 degrees. This arrangement enables specularly reflected light that is reflected from a foreign substance to be more reliably shielded by the imaging-side polarizing filter 53B. This configuration accordingly enables only the location where a foreign substance is present to be made more distinctly recognizable in the obtained image data and enables the inspection for adhesion of any foreign substance to be performed with the higher accuracy.

The present disclosure is not limited to the description of the above embodiment but may be implemented, for example, by configurations described below. The present disclosure may also be naturally implemented by applications and modifications other than those illustrated below.
(a) The above embodiment is configured to perform the second good/ poor quality judgment, based on the image data obtained with emission of the light from the first illumination device 51. A modification may be configured to perform the second good/ poor quality judgment, based on the image data obtained with emission of the light from the second illumination device 52.
(b) According to the embodiment described above, the tablet 5 is the disk-shaped plain tablet (disk-shaped flat tablet) having the circular shape in plan view. The type, the shape and the like of the tablet are, however, not limited to those of the above embodiment. For example, the tablet is not limited to medicinal tablets but includes, for example, food tablets. The tablet is not limited to the plain tablets but includes, for example, orally disintegrating tablets and enteric coated tablets.
   Furthermore, the shape of the tablet is not limited to the circular shape in plan view but may be a polygonal shape in plan view, an oval shape in plan view or an elliptical shape in plan view.
(c) The arrangement and the number of the pocket portions 2 in the PTP sheet are not limited to those of the above embodiment (two arrays and a total of ten pocket portions), but a PTP sheet may employ any of various arrangements and various numbers of the pocket portions, for example, three arrays and a total of twelve pocket portions.

According to the embodiment described above, the PTP film 6 is configured to have the number of pocket portions 2 arrayed corresponding to one sheet along its width direction. The arrangement is, however, not limited to this configuration. For example, the PTP film may be configured to have the number of pocket portions 2 arrayed corresponding to multiple sheets along its width direction.

### Reference Signs List

1... PTP sheet, 2... pocket portion, 3... container film, 4... cover film, 5... tablet, 10... PTP packaging machine, 22... appearance inspection device, 51... first illumination device (first irradiation unit), 51A... first light source, 52... second illumination device (second irradiation unit), 52A... second light source, 52B... emission-side polarizing filter, 53... imaging device (imaging unit), 53B... imaging-side polarizing filter, 60... processing execution device (good/ poor quality judgment unit)

## Claims

1. An appearance inspection device used in a process of manufacturing a PTP sheet (1) configured such that a tablet (5) is placed in a pocket portion (2) formed in a container film (3) and that a cover film (4) is mounted to the container film (3) so as to close the pocket portion (2), the appearance inspection device being configured to perform an inspection for adhesion of a foreign substance to the container film (3) in a stage after the pocket portion (2) of the container film (3) conveyed in a belt-like form is filled with the tablet (5) and before the cover film (4) is mounted to the container film (3),
the appearance inspection device comprising:
an imaging unit (53) provided with a predetermined imaging-side polarizing filter (53B) and configured to take an image of the container film (3) through the imaging-side polarizing filter (53B);
a first irradiation unit (51) placed on a side opposite to the imaging unit (53) across the container film (3), provided with a predetermined first light source (51A), and configured to emit light from the first light source (51A) toward a protrusion side of the pocket portion (2) in the container film (3);
a second irradiation unit (52) provided with a predetermined second light source (52A) and a predetermined emission-side polarizing filter (52B) and configured to emit light from the second light source (52A) through the emission-side polarizing filter (52B) toward an opening side of the pocket portion (2) in the container film (3); and
a good/ poor quality judgment unit configured to perform a good/ poor quality judgment with regard to adhesion of a foreign substance, based on image data obtained by the imaging unit (53), wherein
the imaging-side polarizing filter (53B) has a polarizing direction set to a direction of shielding specularly reflected light from a container film-side out of the light emitted from the second irradiation unit (52),
the imaging unit (53) is configured to take an image of the container film (3) that is irradiated with the lights emitted from both the first irradiation unit (51) and the second irradiation unit (52), and
the good/ poor quality judgment unit is further configured to perform:
a first good/ poor quality judgment that is a good/ poor quality judgment based on image data obtained by imaging the container film (3) by the imaging unit (53) in a state that the container film (3) is irradiated with lights emitted from both the first irradiation unit (51) and the second irradiation unit (52); and
a second good/ poor quality judgment that is a good/ poor quality judgment based on image data obtained by imaging the container film (3) by the imaging unit (53) in a state that the container film (3) is irradiated with light emitted from one of the first irradiation unit (51) and the second irradiation unit (53), and
the good/ poor quality judgment unit is configured to perform a good/ poor quality judgment selected between the first good/ poor quality judgment and the second good/ poor quality judgment.

2. The appearance inspection device according to claim 1,
wherein the good/ poor quality judgment unit is configured to perform the good/ poor quality judgment with regard to adhesion of the foreign substance, based on only a luminance value included in the image data obtained by the imaging unit (53).

3. The appearance inspection device according to claim 1 or 2,
wherein the polarizing direction of the imaging-side polarizing filter (53B) is different from a polarizing direction of the emission-side polarizing filter (52B) by 90 degrees.

4. A PTP packaging machine, comprising:
the appearance inspection device according to any one of claims 1 to 3.

## Patentansprüche

1. Vorrichtung zur Prüfung des Erscheinungsbildes, die in einem Herstellungsprozess eines PTP-Blisters (1) verwendet wird, wobei eine Tablette (5) in einem in einer Behälterfolie (3) ausgebildeten Taschenabschnitt (2) angeordnet ist und eine Deckfolie (4) auf die Behälterfolie (3) aufgebracht ist, um den Taschenabschnitt (2) zu verschließen, wobei die Erscheinungsprüfvorrichtung konfiguriert ist, eine Prüfung auf Anhaftung eines Fremdkörpers an der Behälterfolie (3) in einem Stadium durchzuführen, nachdem der Taschenabschnitt (2) der in Bandform transportierten Behälterfolie (3) mit der Tablette (5) befüllt wurde und bevor die Deckfolie (4) auf die Behälterfolie (3) aufgebracht wird,
wobei die Erscheinungsprüfvorrichtung umfasst:
eine Bildeinheit (53) mit einem vorgegebenen Polarisationsfilter (53B) auf der Abbildungsseite und konfiguriert, ein Bild der Behälterfolie (3) durch den auf der Abbildungsseite angeordneten Polarisationsfilter (53B) aufzunehmen;
eine erste Beleuchtungseinheit (51), die auf der der Bildeinheit (53) gegenüberliegenden Seite der Behälterfolie (3) angeordnet ist, mit einer vorgegebenen ersten Lichtquelle (51A) versehen ist und eingerichtet ist, Licht von der ersten Lichtquelle (51A) in Richtung einer Vorsprungsseite des Taschenabschnitts (2) der Behälterfolie (3) zu emittieren;
eine zweite Beleuchtungseinheit (52), die eine vorgegebene zweite Lichtquelle (52A) und einen vorbestimmten Polarisationsfilter (52B) auf der Emissionsseite aufweist und konfiguriert ist, Licht von der zweiten Lichtquelle (52A) durch den Polarisationsfilter (52B) auf der Emissionsseite in Richtung einer Öffnungsseite des Taschenabschnitts (2) der Behälterfolie (3) zu emittieren; und
eine Gut/Schlecht-Beurteilungseinheit, die konfiguriert ist, eine Gut/Schlecht-Beurteilung hinsichtlich der Anhaftung eines Fremdkörpers auf Grundlage von Bilddaten durchzuführen, die durch die Bildeinheit (53) erfasst wurden, wobei
der Polarisationsfilter (53B) auf der Abbildungsseite eine Polarisationsrichtung aufweist, die so eingestellt ist, dass spiegelnd reflektiertes Licht von der Folienseite der Behälterfolie (3) aus dem von der zweiten Beleuchtungseinheit (52) ausgesandten Licht abgeschirmt wird,
die Bildeinheit (53) konfiguriert ist, ein Bild der Behälterfolie (3) aufzunehmen, die durch Licht sowohl der ersten Beleuchtungseinheit (51) als auch der zweiten Beleuchtungseinheit (52) bestrahlt wird, und
die Gut/Schlecht-Beurteilungseinheit weiter konfiguriert ist,
eine erste Gut/Schlecht-Beurteilung durchzuführen, die auf Bilddaten basiert, welche durch die Bildeinheit (53) aufgenommen wurden, während die Behälterfolie (3) durch Licht sowohl der ersten Beleuchtungseinheit (51) als auch der zweiten Beleuchtungseinheit (52) bestrahlt wird; und
eine zweite Gut/Schlecht-Beurteilung durchzuführen, die auf Bilddaten basiert, welche durch die Bildeinheit (53) aufgenommen wurden, während die Behälterfolie (3) durch Licht nur einer der ersten Beleuchtungseinheit (51) und der zweiten Beleuchtungseinheit (52) bestrahlt wird,
wobei die Gut/Schlecht-Beurteilungseinheit konfiguriert ist, eine Gut/Schlecht-Beurteilung auszuwählen und durchzuführen, die entweder die erste Gut/Schlecht-Beurteilung oder die zweite Gut/Schlecht-Beurteilung ist.

2. Vorrichtung zur Prüfung des Erscheinungsbildes nach Anspruch 1,
wobei die Gut/Schlecht-Beurteilungseinheit konfiguriert ist, die Gut/Schlecht-Beurteilung hinsichtlich der Anhaftung eines Fremdkörpers ausschließlich anhand eines in den durch die Bildeinheit (53) erhaltenen Bilddaten enthaltenen Helligkeitswertes durchzuführen.

3. Vorrichtung zur Prüfung des Erscheinungsbildes nach Anspruch 1 oder 2,
wobei sich die Polarisationsrichtung des Polarisationsfilters (53B) auf der Abbildungsseite um 90° von der Polarisationsrichtung des Polarisationsfilters (52B) auf der Emissionsseite unterscheidet.

4. PTP-Verpackungsmaschine, umfassend die Vorrichtung zur Prüfung des Erscheinungsbildes nach einem der Ansprüche 1 bis 3.

## Revendications

1. Dispositif d'inspection d'aspect utilisé dans un processus de fabrication d'une feuille PTP (1) configurée de telle sorte qu'un comprimé (5) est placé dans une partie poche (2) formée dans un film de récipient (3) et qu'un film de couverture (4) est monté sur le film de récipient (3) de manière à fermer la partie poche (2), le dispositif d'inspection d'aspect étant configuré pour effectuer une inspection d'adhérence d'une substance étrangère au film de récipient (3) dans une étape après que la partie poche (2) du film de récipient (3) transportée sous forme de bande est remplie avec le comprimé (5) et avant que le film de couverture (4) ne soit monté sur le film de récipient (3),
le dispositif d'inspection d'aspect comprenant :
une unité d'imagerie (53) pourvue d'un filtre polarisant côté imagerie prédéterminé (53B) et configurée pour prendre une image du film de récipient (3) à travers le filtre polarisant côté imagerie (53B) ;
une première unité d'irradiation (51) placée sur un côté opposé à l'unité d'imagerie (53) à travers le film de récipient (3), pourvue d'une première source de lumière prédéterminée (51A), et configurée pour émettre de la lumière depuis la première source de lumière (51A) vers un côté en saillie de la partie de poche (2) dans le film de récipient (3) ;
une seconde unité d'irradiation (52) pourvue d'une seconde source de lumière prédéterminée (52A) et d'un filtre polarisant côté émission prédéterminé (52B) et configurée pour émettre de la lumière depuis la seconde source de lumière (52A) à travers le filtre polarisant côté émission (52B) vers un côté ouverture de la partie poche (2) dans le film de récipient (3) ; et
une unité de jugement de bonne/mauvaise qualité configurée pour effectuer un jugement de bonne/mauvaise qualité en ce qui concerne l'adhérence d'une substance étrangère, sur la base de données d'image obtenues par l'unité d'imagerie (53), dans lequel
le filtre polarisant côté imagerie (53B) présente une direction de polarisation réglée sur une direction de protection de la lumière réfléchie de manière spéculaire par un côté film de récipient hors de la lumière émise par la seconde unité d'irradiation (52),
l'unité d'imagerie (53) est configurée pour prendre une image du film de récipient (3) qui est irradié par les lumières émises à la fois par la première unité d'irradiation (51) et la seconde unité d'irradiation (52), et
l'unité de jugement de bonne/mauvaise qualité est en outre configurée pour effectuer :
un premier jugement de bonne/mauvaise qualité qui est un jugement de bonne/mauvaise qualité basé sur des données d'image obtenues en imageant le film de récipient (3) par l'unité d'imagerie (53) dans un état où le film de récipient (3) est irradié avec des lumières émises à la fois par la première unité d'irradiation (51) et la seconde unité d'irradiation (52) ; et
un second jugement de bonne/mauvaise qualité qui est un jugement de bonne/mauvaise qualité basé sur des données d'image obtenues en imageant le film de récipient (3) par l'unité d'imagerie (53) dans un état où le film de récipient (3) est irradié par la lumière émise par l'une de la première unité d'irradiation (51) et de la seconde unité d'irradiation (53), et
l'unité de jugement de bonne/mauvaise qualité est configurée pour effectuer un jugement de bonne/mauvaise qualité sélectionné entre le premier jugement de bonne/mauvaise qualité et le second jugement de bonne/mauvaise qualité.

2. Dispositif d'inspection d'aspect selon la revendication 1,
dans lequel l'unité de jugement de bonne/mauvaise qualité est configurée pour effectuer le jugement de bonne/mauvaise qualité en ce qui concerne l'adhérence de la substance étrangère, sur la base uniquement d'une valeur de luminance incluse dans les données d'image obtenues par l'unité d'imagerie (53).

3. Dispositif d'inspection d'aspect selon la revendication 1 ou 2,
dans lequel la direction de polarisation du filtre polarisant côté imagerie (53B) est différente d'une direction de polarisation du filtre polarisant côté émission (52B) de 90 degrés.

4. Machine d'emballage PTP, comprenant :
le dispositif d'inspection d'aspect selon l'une quelconque des revendications 1 à 3.
